(19) **Europäisches Patentamt**
**European Patent Office**
**Office européen des brevets**

(11) **EP 1 610 103 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(51) Int Cl.:
*G01G 23/04* *(2006.01)*     *G01G 23/01* *(2006.01)*
*G01G 19/04* *(2006.01)*

(21) Anmeldenummer: **05013519.3**

(22) Anmeldetag: **23.06.2005**

(54) **Verfahren zur Ermittlung von Referenzgewichten mit einer dynamischen Gleiswaage**

Method of determining reference weights by means of a dynamic railway cars scale.

Procédé pour déterminer des poids de référence au moyen d'une balance dynamique pour wagons.

(84) Benannte Vertragsstaaten:
**AT BE BG CH CY CZ DK EE ES FI FR GB GR HU IE IS IT LI LT LU MC NL PL PT RO SE SI SK TR**

(30) Priorität: **25.06.2004 DE 102004030742**

(43) Veröffentlichungstag der Anmeldung:
**28.12.2005 Patentblatt 2005/52**

(73) Patentinhaber: **Schenck Process GmbH**
**64293 Darmstadt (DE)**

(72) Erfinder:
• **Müller, Ralph**
**64291 Darmstadt (DE)**
• **Groll, Peter**
**64297 Darmstadt (DE)**
• **Speyerer, Mike**
**55270 Schwabenheim (DE)**

(56) Entgegenhaltungen:
**DE-A1- 19 859 492     DE-C- 439 342**

• **DATABASE WPI Section EI, Week 199101 Derwent Publications Ltd., London, GB; Class S02, AN 1991-006069 XP002344247 -& SU 1 566 223 A (VANNIKOV YU L) 23. Mai 1990 (1990-05-23)**

**Beschreibung**

Die Erfindung betrifft ein Verfahren zur Ermittlung von Referenzgewichten mit einer dynamischen Gleiswaage gemäß dem Oberbegriff des Patentanspruchs 1.

Zu einer genauen Kalibrierung oder Eichung einer dynamischen Gleiswaage ist die vorherige Bestimmung von Referenzgewichten der verschiedenen Waggonbauarten notwendig, die später verwogen werden sollen und die für eine dynamische Eichung vorgeschrieben sind. Dies geschah in früheren Jahren meist auf einer separaten geeichten hochgenauen statischen Gleiswaage, die in notwendiger Anzahl bei den Bahnbetreibern oder im Gleisnetz von Privatfirmen vorhanden war. Dazu mußte der gesamte Zugverband mit den notwendigen Waggons unterschiedlicher Bau- und Beladungsarten zur nächsten dafür geeigneten statischen Gleiswaage geschleppt und einzeln auf die Waage rangicrt und verwogen werden. Hierzu waren nur Brückenwaagen für eine Ganzwaggonwägung geeignet, die in erreichbarer Nähe auch zur Verfügung stehen mußte. Dies war sehr aufwendig und ist heute insbesondere durch die geringe Anzahl derartig geeichter statischer Brückenwaagen nur noch schwer durchführbar und insbesondere wegen der großen Entfernungen und der langen Verfahrenszeit kostenintensiv. Diese Verfahren mußten teilweise auch wiederholt werden, wenn der Zugverband nach der Referenzgewichtsermittlung durch gewichtsbeeinflussende Regenschauer oder Staubemissionen geriet.

Aus der DE 198 59 492 A1 ist eine Gleiswaage bekannt, die in erster Linie für eine dynamische Überfahrtwägung vorgesehen ist, aber auch gleichzeitig eine integrierte statische Gleiswaage enthält. Bei dieser Gleiswaage sind zwischen den unterbrechungsfreien Schienen und deren Schwellen hochgenaue Wägezellen auf einer Meßstrecke von vorzugsweise vier bis fünf Metern angeordnet. Bei der Überfahrt eines Waggons wird deshalb die Radaufstandskraft über die Wägezellen in die Schwellen eingeleitet und es werden Meßsignale erzeugt, die der Radaufstandskraft proportional sind. Mit einer derartigen Gleiswaage wird vorzugsweise beim Überfahren das genaue Achs- oder Drchgestellgcwicht gemessen und daraus für jeden Waggon dessen Gesamtgewicht errechnet. Mit einer derartigen Waage kann aber auch bei einem stehenden Waggon das statische Achs- oder Drehgestellgcwicht auf der Meßstrecke gemessen und daraus dessen Waggongewicht errechnet werden. Eine derartige Gleiswaage ist auch eichfähig und muß dann sowohl für statische als auch für dynamische Waggonwägungen geeicht bzw. kalibriert werden.

Eine entsprechende Kalibriervorrichtung für Gleiswaagen ist aus der DE 44 39 342 C2 bekannt. Dazu ist für im Gleiskörpcr angeordnete Schubkraftaufnehmer eine bügelartige Vorrichtung mit zwei Schenkeln vorgesehen, die am Gleis befestigt werden. Dann wird über eine dazwischen angeordnete Druckvorrichtung eine definierte Kraft vertikal in die Schienen eingeleitet, dessen Reaktionskraft in den Schenkeln durch geeichte Kraftaufnehmer gemessen wird. Mit Hilfe dieser gemessenen Referenzkraft werden dann die Kraftaufnehmer in der Schiene kalibriert. Dieses Verfahren ist weder für eine statische noch eine dynamische Eichung einer Gleiswaage zulassig und zumindest für eine dynamische Eichung zu ungenau.

Deshalb wird die vorstehende Gleiswaage (DE 198 59 492 A1) in der Praxis zunächst mit einer stationären Gewichtsbclastung der Meßstrecke mit mehreren bekannten Referenzgewichten wie beispielsweise Eichfahrzeugen statisch geeicht bzw. kalibriert. Dadurch entsteht eine geeichte integrierte statische Gleiswaage, die allerdings nur für statische Wägungen zugelassen ist. Die Eichung der dynamischen Gleiswaage muß allerdings mit den zu wiegenden Gleisfahrzeugen erfolgen, wozu für jede zugelassene Waggonbauart eine spezielle Eichung mit Fahrzeugen dieser Bauart durchgeführt wird, dessen Referenzgewicht vorher bestimmt werden muß. Zur Vereinfachung der dynamischen Eichung kann dann das Referenzgewicht der verschiedenen Waggonbauarten auch auf der geeichten integrierten statischen Gleiswaage durchgeführt werden. Dazu wird in der Praxis jede Achse und jedes Drehgestell jeweils richtungsmäßig an mehreren Aufstellpunkten stationär auf der statischen Gleiswaage positioniert und aus dieser Vielzahl von Meßwerten wird dann für jede Waggonbauart dessen Referenzgewicht berechnet. Dies ist insbesondere sehr zeitaufwendig, da jede Waggonbauart einzeln in jeder Fahrtrichtung abwechselnd positioniert und wiederholt gemessen werden muß, um das Refurenzgawicht jedes einzelnen Waggons zu erhalten. Da eine derartige dynamische Gleiswaage mit mindestens zehn verschiedenen Waggonbau- und Beladungsarten geeicht wird, ist auch dieser Aufwand zur Bestimmung der geeichten Referenzgewichtc sehr groß, zeitaufwendig und damit kostenintensiv und wird daher auch nur dann eingesetzt, wenn eine statische Referenzwaage in erreichbarer Entfernung bei wirtschaftlich vertretbarem Aufwand nicht zur Verfügung steht.

In XP-002344247 werden mehrere Produkte gewogen, dabei einzelgewichtswerten gewonnen und daraus ein Mittelwert gebildet.

Der Erfindung liegt daher die Aufgabe zugrunde, das Eichverfahren bzw. Kalibrierverfahrcn für eine dynamische Gleiswaage zu vereinfachen und dabei insbesondere die Verfahrenszeit zu verkürzen.

Diese Aufgabe wird durch die im Patentanspruch 1 angegebene Erfindung gelöst. Weiterbildungen und vorteilhafte Ausführungsbeispicle der Erfindung sind in den Unteransprüchen angegeben.

Die Erfindung hat den Vorteil, daß durch die Bestimmung dcr Referenzgewichte während der Überfahrt eine Entkupplung der zu messenden Waggons aus dem Zugverband nicht unbedingt notwendig ist. Darüber hinaus muss auch nicht jeder Waqgontyp bzw. Bauart nach jedem Wägevorgang umpositioniert werden, wodurch ein großer Zeitvorteil erreichbar ist.

Weiterhin ist dieses verkürzte Verfahren zur Referenzgewichtsbestimmung sehr genau, da Lageungenauigkeit im Gleis herausgemittelt werden und Reibungseinflüsse durch ungünstige Lager- oder Federpositionen bei den Referenzwaggons durch die Fahrtbewegung kaum auftreten können. Darüber hinaus kann die Genauigkeit durch eine einfache Erhöhung der verwogenen Überfahrtanzahl gesteigert werden und dies vorteilhaft sogleich für alle notwendigen Waggontypen. Durch dieses dynamische Referenzgewichtsbestimmungsverfahren entsteht zusätzlich der Vorteil, daß es relativ unabhängig von der Auffahrtrichtung ist und es auf die genaue Positionierung auf der statischen Waage im Grunde nicht ankommt und daher schwierige Positionierungen von schweren Eisenbahnwaggons vermieden werden.

Eine besondere Ausbildung der Erfindung, bei der die Waggons weitgehend entkuppelt von anderen Waggons und in sehr langsamer gleichmäßiger Geschwindigkeit über die Gleiswaage befördert werden, hat den Vorteil, dass dadurch die Genauigkeit der Einzelmessungen derart erhöht wird, dass nur noch verhältnismäßig wenige Überfahrtwägungen zur Bestimmung des Referenzgewichts notwendig sind. Dabei werden die einzelnen Waggons mittels einer Zug- oder Schubkraft langsam über die Waage bewegt, wobei durch ungünstiges Kupplungsspiel und Ankuppelspannungen bedingte störende Ankopplungskräfte vorteilhaft vermieden werden, die sonst teilweise das Streuungsmaß erheblich erhöhen können.

Die Erfindung wird anhand eines Ausführungsbeispiels, das in der Zeichnung dargestellt ist, näher erläutert. Es zeigen:

Fig. 1: ein Meßwertediagramm von zehn verwogenen Über- fahrten eines Zugverbandes mit sechzehn ver- schiedenen Waggonbauarten, und

Fig. 2: eine Meßwertetabelle der zehn verwogenen Über- fahrten des Zugverbandes.

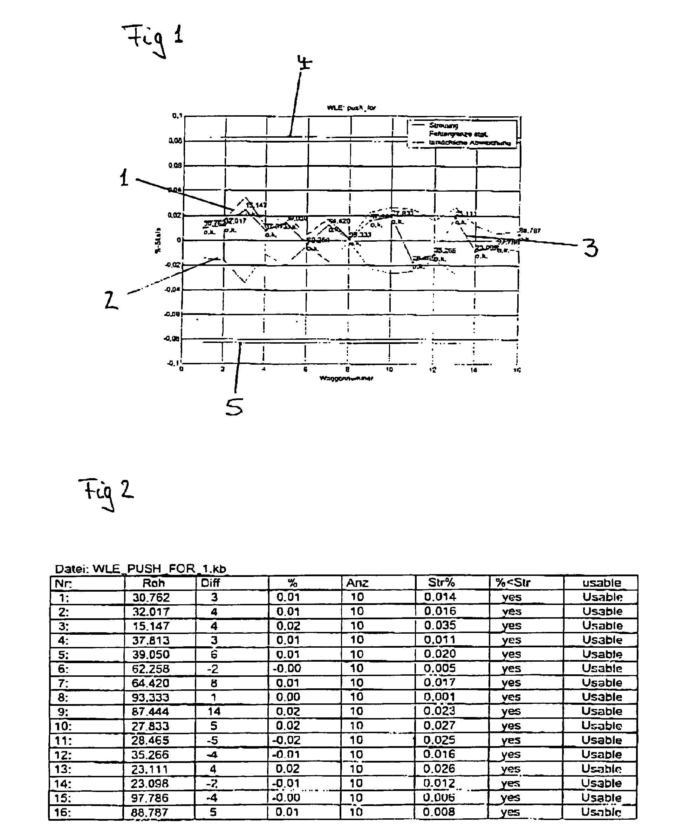

In dem Meßwertediagramm nach Fig. 1 der Zeichnung ist ein Verfahren zur Referenzgewichtsbestimmung von sechzehn verschiedenen Waggons unterschiedlicher Bau- und Beladungsarten bei zehn verwogenen Überfahrten einer Richtung dargestellt. In der Praxis wird man mindestens zehn verwagene Überfahrten in beide Richtungen vornehmen, um ein genaueres Ergebnis der zu crmittelnden Referenzgewichte zu erhalten. Das Verfahren zur Referenzgewichtsbestimmung wurde dabei auf einer Gleiswaage nach der vorgenannten DE 100 31 092 A1 durchgeführt, die eine dynamische Gleiswaage darstellt, in dcr eine statische Gleiswaage integriert ist.

Diese Gleiswaage besteht aus einer Meßstrecke von ca. 4,5 m Länge, die aus typischerweise sieben Wägeschwellen gebildet ist. Die Wägeschwellen sind wie übliche Schwellen im Gleisbett verlegt und sind auf der Oberseite mit jeweils zwei hochgenauen Wägezellen bestückt, auf denen sich die Schienen abstützen. Vorteilhafterweise sind die Wägeschwellen mit dem Schotterbett verklebt und mit einer Wägeelektronik verbunden, die die Waggons achsweise oder drehgestellweise verwiegt und daraus rechnerisch das Waggongewicht ermittelt. Da eine derartige Gleiswaage die jeweilige Radaufstandskraft erfaßt, enthält sie gleichzeitig auch eine statische Gleiswaage, die sogleich zur Eichung bzw, einer genauen Kalibrierung des dynamischen Teils verwendbar ist.

Dazu ist zunächst die integrierte statische Waage wie eine herkömmliche statische Gleiswaage mit statischen Referenzgewichten oder Eichfahrzeugen zu eichen. Ein derartiges statisches Eichverfahren ist auch verhältnismäßig einfach durchzuführen, da hierzu nur ein bestimmtes Eichfahrzeug oder Referenzgewicht nötig ist, weil sich statisch im Grunde alle Gewichte gleich verhalten. Die so geeichte Gleiswaage ist wie eine separate statische Waage verwendbar und kann deshalb auch zur Ermittlung von Referenzgewichten benutzt werden, die zur Eichung einer dynamischen Gleiswaage benötigt werden.

Zur Eichung des dynamischen Teils der Gleiswaage, die die Gewichtswerte während der Überfahrt ermittelt, sind nach den Eichvorschriften der Bundesrepublik Deutschland als Referenzgewichte verschiedene Waggonbau- und Beladungsarten vorgeschrieben, die in Zukunft auf der jeweiligen dynamischen Gleiswaage vorwogen werden sollen. Dabei müssen bei der dynamischen Eichung die Weggongewichte der verschiedenen Bau- und Beladungsarten so genau bestimmt werden, daß 90% der Eichwägungen in einem Genauigkeitsbereich liegen, die der Hälfte der Eichqenauigkeit der dynamischen Waage entspricht. Die Messabweichung der Referenzwaage darf dabei 1/3 der Eichgenauigkeit der dynamischen Gleiswaage nicht überschreiten, sofern die Referenzwaage unmittelbar vorher geeicht wurde. Wurde die Refcrenzwaage zu jedem anderen Zeitpunkt geeicht, darf die Meßabweichung der Referenzwaage 1/5 der Eichgenauigkeit der dynamischen Gleiswaage nicht überschreiten. Da bei Verwendung der internen Referenzwaage diese unmittelbar vorher statisch geeicht wurde, muß diese statisch die 1/3 des Eichfehlcrs der dynamischen Waage einhalten. Beispielsweise beträgt für die Klasse OIML 0.5 der dynamischen Waage ein Eichfehler von 0,25% und somit eine zulässige Meßabweichung der internen Referenzwaage von 0,083%.

Das erfindungsgemäße Verfahren zur Bestimmung der Referenzgewichte geht deshalb von einem Verfahren aus, bei dem eine Streuung der Referenzgewichtswerte nur ein Drittel des Eichfehlers von 0,25 %, also somit 0,083 %, betragen darf, um als Referenzgewicht benutzt werden zu können. Zur Eichung der dynamischen Waage wurde deshalb vorzugsweise ein Zugverband mit sechzehn angekuppelten Waggons unterschiedlicher Bau- und Beladungsarten verwendet, der im wesentlichen alle beim jeweiligen Kunden gebräuchliche Waggonarten enthält. Zur Bestimmung der Referenzgewichte wurde dieser Zugverband mit einer niedrigen Überfahrtgeschwindigkeit von vorzugsweise 2 bis 5 km/h zehnmal in jeder Fahrtrichtung über die Wägestrecke gefahren und dabei die einzelnen Waggons achs- und drchgestellweise verwogen. Vorzugsweise wird dies zusätzlich auch noch im Schiebebetrieb durchgeführt, um eine Verbesserung der Genauigkeit der Referenzgewichtsbestimmung zu erzielen.

Bei diesen verwegenen Überfahrten wurde für jeden Waggontyp bzw. für jede Bauart je Überfahrt und Richtung als Einzelwägeergebnis ein Rohqewichtswert ermittelt. Mittels einer elektronischen Rechenschaltung wird aus der Summe der Rohgewichte ein mittleres Rohgewicht errechnet. Die jeweilige Abweichung des Rohgewichts vom mittleren Rohgewicht je Bauart ergibt ein sogenanntes Streumaß, das vorzugsweise nach folgender Formel:

$$\sqrt{\sum\left(\left(\frac{Roh - Mittel(Roh)}{AnzWaegungen \cdot Mittel(Roh)}\right)^2\right)} \cdot 150\%$$

errechnet wird. Dabei entspricht:

Roh = Rohgewichtswert je verwogener Überfahrt pro Waggontyp;

Mittel(Roh) = der Mittelwert allcr gemessenen Rohgewichte;

AnzWaegungen = die Anzahl der verwogenen Rohgewichtswerte, und 150% = ein Bewertungsfaktor K, der empirisch aus den dynamischen Wägungen einer bestimmten Waage ermittelbar ist.

Dabei wird der Bewertungsfaktor K so gewählt, daß das Streuungsmaß in allen bekannten Fällen eine obere Abschätzung des relativen prozentualen Fehlers des Referenzgewichtes ergibt. Das heißt, bei einer bestimmten Bauart muß die Abweichung vom tatsächlichen Waggongewicht bei allen Versuchen stets geringer sein als das Streuungsmaß, was bauartbedingt durch Kontrollwägungen ermittelbar ist.

Dieses errechnete prozentuale Streuungsmaß für jeden Waggontyp wird dann mit dem zugelassenen maximalen relativen Streuungsmaß als Grenzwert von 0,083 verglichen und bei Einhaltung dieser Grenzabweichung als verwendbar gewertet. Dabei wird das Referenzgewicht aus den gewonnenen Rohgewichten nur dann gebildet, wenn mindestens 50 % der Rohgewichte einer Meßserie von beispielsweise zehn Meßfahrtcn innerhalb des relativen maximalen Streuungsmaßes von 0,083 % liegen und kein Auswertefehler vorliegt, der bei stark schwankendem Meßsignalverlauf auftritt. Das Referenzgewicht wird dann vorzugsweise nur aus den Rohgewichten gebildet, die innerhalb des relativen maximalen Streungsmaß von 0,083 % liegen. Ein derartiges Referenzgewicht ist dann hinreichend genau, um zu einer dynamischen Eichung herangezogen werden zu können. Dieses Verfahren ist aber auch anwendbar, wenn für einen bestimmten Waggontyp wegen Überschreitung des relativen maximalen Streuungsmaßes keine dynamische Referenzgewichtsbestimmung möglich ist, da dann dieser Waggon mit geringfügig größerem Aufwand separat statisch verwogen werden kann.

Aus dem Meßwertediagramm nach Fig. 1 der Zeichnung sind die prozentualen Meßergebnisse hinsichtlich ihres Streuungsmaßes in positiver Richtung 1 und negativer Richtung 2 sowie deren tatsächliche prozentuale Abweichung 3 ersichtlich. Dabei sind aut der Abszisse die laufende Nummer der Waggons im Zugverband von 1 bis 16 dargestellt. Auf der Ordinate sind die relativen bzw. prozentualen Abweichungen angegeben, die als Kurven für das relative maximale positive 4 und negative b Streuungsmaß von 0,083 % vorgegeben sind. Dabei stellt die prozentuale tatsächliche Abweichung 3 im Grunde ein Kontrollmaß dar, das aufgrund einer tatsächlichen Referenzgewichtsmessung auf einer separaten hochgenauen statischen Waage ermittelt wurde.

Aus dem dargestellten Diagramm ist eindeutig ersichtlich, daß die tatsächliche Abweichung 3 immer niedriger als das errechnete Streuungsmaß 1, 2 ist, da sich diese Kurve 3 innerhalb der beiden errechneten Streuungsmaßkurven 1, 2 befindet. Die eingetragenen tatsächlichen Waggongewichtswerte sind deshalb als "ok" und damit als verwendbar bezeichnet. Weiterhin ist aus den Streuunqsmaßkurven 1, 2 ersichtlich, daß diese weit unter den Kurven für das maximal zulässige Streuungsmaß 4, 5 von 0,083 % liegen, so daß dieses Verfahren zur Referenzgewichtsermittlung mit dem errechneten Streuungsmaßverlauf 1, 2 für alle Waggonbauarten hinreichend genau ist und für eine dynamische Eichung verwendet werden kann.

Die absoluten Meßwerte, die der grafischen Darstellung nach Fig. 1 zugrunde liegen, sind in der Meßwertetabelle nach Fig. 2 zahlenmäßig angegeben. In der ersten Spalte sind dabei die verschiedenen Waggons im Zugverband numerisch als Nr. 1 bis 16 aufgeführt. Dabei handelt es sich vorzugsweise um alle vorkommenden Waggonbauarten in verschiedener Länge, verschiedenen Gewichtsstufen und verschiedenen Achsbauarten mit ein- und mehrteiligen Drehgestellen sowie unterschiedlichen Aufbauten. In Spalte 2 (Roh) folgen die mittleren Rohgewichte einer Überfahrtwägung von zehn verwogenen Überfahrten in einer Fahrtrichtung. Dazu sind unter "Roh" mittlere Rohgewichtswerte der verschiedenen Waggontypen ermittelt, die einen Gewichtsbereich von 15 bis 97 t abdecken. Daraus ist bereits ersichtlich, daß dieses Referenzermittlungsverfahren erhebliche Vorteile gegenüber einem Verfahren aufweist, bei dem diese Waggongewichte einzeln auf verschieden vorgegebene Stellen einer statischen Waage positioniert werden müssen. In Spalte 3 (Diff) ist die tatsächliche und in Spalte 4 (%) die prozentuale Abweichung angegeben, die mittels einer hochgenauen separaten Kontrollwaagc ermittelt wurde. Hingegen ist in Spalte 5 (Anz) die Anzahl der Überfahrtwägungen und in Spalte 6 (Str%) das errechnete prozentuale Streuungsmaß angegeben. In Spalte 7 (%<Str) und 8 (usable) sind die Bewertungen aufgeführt, wonach das Streuungsmaß 1, 2 größer war als die tatsächliche Abweichung 3 und ob das mittlere Rohgewicht als Referenzgewicht verwendbar ist.

Wie aus der tabellarischen Darstellung ersichtlich ist, kann mit dem erfinderischen Verfahren das Referenzgewicht mit einer Abweichung von maximal 14 kg oder 0,02 % bei einem Waggongewicht von 87.444 kg bestimmt werden. Darüber hinaus ergibt sich aus der Angabe des Streuungsmaßes (Str%), daß deren höchster Wert bei 0,035 % für den Waggontyp Nr. 3 ermittelt wurde und damit noch einen Abstand von 0,05 % zum maximal zulässigen Wert von 0,083 aufweist. Damit ist ein hinreichender Genauigkeitsabstand gewährleistet, so daß alle dynamisch ermittelten Meßwerte zur Referenzgewichtsbildung verwendbar sind.

Bei angekoppelten Zugverbänden weisen die einzelnen Kupplungen zwischen den Waggons unterschiedliches Lagerspiel und unterschiedliche Ankopplungskräfte auf, die bei einer Überfahrt über die Wägestrecke zu ungenauen Rohgewichtswerten führen können, die sich durch stark schwankenden Messsignalverlauf zeigen. Dabei kann es vorkommen, dass bei einer vorgegebenen Anzahl an Überfahrtwägungen keine 50% der Rohgewichtswerte innerhalb des maximalen Streuungsmaßes von 0,083 % liegen. Deshalb kann das Verfahren auch mit entkuppelten Waggons unterschiedlicher Bauart und Beladung durchgeführt werden. Dazu werden die einzelnen Waggons zwar im Zugverband in die Nähe der Waage verbracht, dann entkuppelt und mit konstanter Zugodcr Schubkraft und sehr langsamer gleichmäßiger Geschwindigkeit über die Wägestrecke bewegt. Dazu wird vorzugsweise eine Seilwinde oder eine Hydraulikeinrichtung verwendet, durch die die Waggons mit gleichmäßiger Zug- oder Schubkraft über die Wägestrecke bewegbar sind. Dadurch werden die schwankenden Ankupplungskräfte vermieden, die im Zugverband hauptsächlich die Unterschiede in den Rohgewichtswerten bei der Überfahrtwägung bewirken.

So wurdcn bei einem Zugverband mit unterschiedlichem Kupplungsspiel und unterschiedlichen Ankupplungskräften die einzelnen Waggons entkuppelt und mittels einer Seilwinde mit einer Geschwindigkeit von vorzugsweise 0,5 bis 2 km/h gleichmäßig in beide Richtungen über die dynamische Waage gezogen und jeweils verwogen. Dabei ergaben sich Strouungsmaßabweichungen, die weit unter 0,083 % lagen, so dass bereits durch zwei Überfahrtwägungen ein hinreichend genaues Referenzgewicht der jeweiligen Waggons ermittelbar war. Da derartige Seilwinden an verschiedenen Rangierloks oder an Straßenfahrzeugen vorhanden sind, können die Waggons auf einfache Weise beispielsweise über Umlenkrollen leicht in beide Richtungen über die Waage gezogen werden, so dass auch ein Zugverband von beispielsweise sechzehn verschiedenen Waggonbauarten in verhältnismäßig geringer Zeitspanne dynamisch verwogen werden kann. Dies ist auch bei sehr niedriger Geschwindigkeit von vorzugsweise 1,0 km/h wesentlich schneller ausführbar als die sechzehn Waggonbauarten in verschiedenen Positionierungen zu bringen wie dies bei einer statischen Referenzgewichtsermittlung notwendig ist. Im übrigen ist eine derartige Überfahrtwägung auch wesentlich genauer ausführbar, da sich Lageungenauigkeiten der Waage und der Waggonaufbauten insbesondere bei unterschiedlicher Übcrfahrrichtung ausgleichen, so dass bereits mit einer Überfahrt je Fahrtrichtung zwei Rohgewichtswerte ermittelbar sind, deren Streuungsmaß so gering ist, dass daraus bereits ein hinreichend genaues Referenzgewicht ermittelt werden kann. Vorzugsweise werden aber mindestens zwei Überfahrtwägungen pro Fahrtrichtung durchgeführt.

Eine derartige entkuppelte Referenzgewichtsbestimmung kann nicht nur mit einem Scilwindenantrieb, sondern auch durch eine entsprechende Hydraulikvorrichtung erfolgen, die den jeweiligen Waggon über die Wägestrecke schiebt. Dazu können weitgehend reibungsfreie kugelartigc Lagervorrichtungen eingesetzt werden, die die Zug- oder Schubkräfte übertragen, bei denen die störenden Ankoppelkräfte vernachlässigbar sind. Mit derartigen Einrichtungen sind aber auch definierte Ankopplungskräfte denkbar, die zur Referenzgewichtsermittlung rechnerisch berücksichtigt werden können.

Dieses Verfahren bietet zumindest bei der vorliegenden Gleiswaage den Vorteil, daß mit nur einer Waage eine Vielzahl unterschiedlicher Referenzgewichte auf einfachste weise für die Eichung der selben dynamischen Waage vor Ort bestimmt werden können. Es ist aber auch möglich, mit derartigen dynamischen Gleiswaagen mit integrierter statischer Waage auch die Referenzgewichte für zu eichende andere dynamische Gleiswaagen zu bestimmen, die z. B. nicht über einen statischen Wägeteil verfügen. Dieses Verfahren ist im Grunde für alle dynamischen Gleiswaagen mit integriertem cichfähigen statischen Teil möglich. Sollte es hingegen bei speziellen Bauarten von Gleiswaagen oder speziellen Waggontypen nicht durchführbar sein, so ergibt sich dieses bereits bei der Ermittlung des Streuungsmaßes, das dann über dem maximal zulässigen Streuungsmaß liegt. In diesen Fällen ist aber insgesamt oder für bestimmte Einzelwaggons dann noch jeweils eine statische Referenzgewichtsermittlung durchführbar. Darüber hinaus ist eine derartige Referenzgewichtsbestimmung nicht nur für staatlich zugelassene Eichverfahren einsetzbar, sondern kann auch für eine hochgenaue Kalibrierung einer dynamischen Waage genutzt werden.

**Patentansprüche**

1. Verfahren zur Ermittlung von Referenzgewichten mit einer dynamischen Gleiswaage, die einen integrierten statischen Wägeteil enthält, wobei als Referenzgewichte die Gewichtswerte verschiedener Waggonbau- und Beladungsarten vorgesehen sind, die zur Eichung bzw. Kalibrierung einer dynamischen Gleiswaage dienen und die als Ganzes oder achs- bzw. drehgestellweise in einer vorgegebenen Anzahl von Einzelwägungen ermittelt werden, wobei aus den Einzelwägungen ein Mittelwert als Referenzgewicht der vorgesehenen wäggonbau- oder Beladungsartcn gebildet wird, **dadurch gekennzeichnet, daß** die Einzelwägungen während einer vorgegebenen Anzahl an Überfahrten über die Gleiswaage erfolgen, bei denen aus den Einzelwägeergebnissen als Rohgewichtswerte der vorgesehenen Waggonbau- oder Beladungsarten und deren Rohgewichtsmittelwerte ein Streuungsmaß (1, 2) ermittelt und mit einem vorgegebenen Grenzwert (4, 5) verglichen wird und bei Einhaltung dieses Grenzwertes (4, 5) und einer vorgegebenen Anzahl in diesem Grenzwertbereich befindlicher Rohgewichtswerte der Rohgewichtsmittelwert als Referenzgewicht bestimmt wird.

2. Verfahren nach Anspruch 1, **dadurch gekennzeichnet, daß** die Überfahrten in einem Zugverband oder einzeln innerhalb der zulässigen Überfahrtgeschwindigkeit von 0,1 bis 5 km/h mindestens in einer Fahrtrichtung erfolgen.

3. Verfahren nach Anspruch 1 oder 2, **dadurch gekennzeichnet, daß** die Überfahrten im Zug- und/oder Schiebcbctrieb durchgeführt werden.

4. Verfahren nach einem der vorhergehenden Ansprüche, **dadurch gekennzeichnet, daß** aus den Rohgewichtswerten das Strcuungsmaß nach folgender Formel

$$\sqrt{\sum\left(\left(\frac{Roh - Mittel(Roh)}{AnzWaegungen \cdot Mittel(Roh)}\right)^2\right) \cdot K[\%]}$$

ermittelt wird, wobei
"Roh" dem Wert des Roh- oder Waggongewichts einer Bau- oder Beladungsart,
"Mittel(Roh)" dem Mittelwert der Roh- oder Waggongewichte einer Bau- oder Beladungsart,
"AnzWaegungen" der Anzahl der verwendeten Wägungen, und "k" dem Faktor einer empirisch ermittelten Größe einer bestimmten Waage entspricht, bei dem das Streuungsmaß in allen bekannten Fällen eine obere Abschätzung des relativen prozentualen Fehlers des Referenzgewichtcs ergibt.

5. Verfahren nach einem der vorhergehenden Ansprüche, **dadurch gekennzeichnet, daß** das Referenzgewicht aus den Rohgewichtswerten der einzelnen waggonbau- oder Beladungsart bei mindestens fünf Überfahrten je Fahrtrichtung ermittelt wird.

6. Verfahren nach einem der vorhergehenden Ansprüche, **dadurch gekennzeichnet, daß** die Ermittlung der Refercnzgewichte je Fahrzeugbauart nur dann durchgeführt wird, wenn das Streuungsmaß den Grenzwert (4, 5) von einem Drittel des Eichwertes der dynamischen Gleiswaage nicht überschreitet.

7. Verfahren nach einem der vorhergehenden Ansprüche, **dadurch gekennzeichnet, daß** die Rohgewichtswerte nur dann zur Ermittlung des Referenzgewichtes verwendet werden, wenn deren Abweichung den Grenzwert (4, 5) von einem Drittel des Eichwertes der dynamischen Gleiswaage nicht überschreitet.

**Claims**

1. Method of determining reference weights by means of a dynamic railway car scale, which contains an integrated static weighing component, wherein the weight values of various designs of railway car and types of load are provided as reference weights, serve to standardize or calibrate a dynamic railway car scale and are determined in their entirety or on axle basis or bogie basis in a predefined number of individual weighing operations, wherein a mean value is formed from the individual weighing operations as a reference weight of the designs of railway car or types of load provided, **characterized in that** the individual weighing operations take place during a predefined number of crossings over the railway car scale, during which a variation measure (1, 2) is determined from the individual weighing results as gross weight values of the designs of railway car or types of load provided and their gross weight mean values, and is compared with a predefined limiting value (4, 5), and when this limiting value (4, 5) is complied with and there is a predefined number of gross weight values in this limiting value range the gross weight mean value is determined as a reference weight.

2. Method according to Claim 1, **<u>characterized</u> in that** the crossings take place in a train assembly or individually within the permissible crossing speed of 0.1 to 5 km/h, in at least one direction of travel.

3. Method according to Claim 1 or 2, **<u>characterized</u> in that** the crossings are carried out in the traction mode and/or overrun mode.

4. Method according to one of the preceding claims, **<u>characterized</u> in that** the variation measure is determined from the gross weight values according to the following formula:

$$\sqrt{\sum\left(\left(\frac{mean\ gross\ (gross)}{mean\ number\ of\ weighing\ operations\ (gross)}\right)^2\right)} \cdot K[\%]$$

where
"gross" corresponds to the value of the gross weight or railway car weight of a design or of a type of load, "mean (gross)" corresponds to the mean value of the gross weights or railway car weights of a design or type of load, "number of weighing operations" corresponds to the number of weighing operations used, and
"k" corresponds to the factor of an empirically determined size of a certain scale, in which factor the variation measure in all known cases results in an upper estimate of the relative percentage error of the reference weight.

5. Method according to one of the preceding claims, **<u>characterized</u> in that** the reference weight is determined from the gross weight values of the individual railway car design or type of load per direction of travel for at least five crossings.

6. Method according to one of the preceding claims, **<u>characterized</u> in that** the determination of the reference weights per type of vehicle is carried out only if the variation measure does not exceed the limiting value (4, 5) by a third of the standardization value of the dynamic railway car scale.

7. Method according to one of the preceding claims, **<u>characterized</u> in that** the gross weight values are used to determine the reference weight only when the deviation thereof does not exceed the limiting value (4, 5) by a third of the standardization value of the dynamic railway car scale.

**Revendications**

1. Procédé de détermination de poids de référence avec une bascule à wagons dynamique, laquelle contient une partie de pesage statique intégrée, les poids de référence prévus étant les valeurs du poids de différents types de construction de wagon et de chargement qui servent à l'étalonnage ou au calibrage d'une bascule à wagons dynamique et qui sont déterminés en tant qu'ensemble ou encore essieu par essieu ou bogie par bogie dans un nombre prédéfini de pesages individuels, une valeur moyenne étant formée à partir des pesages individuels en tant que poids de référence des types de construction de wagon ou de chargement, **caractérisé en ce que** les pesages individuels sont effectués pendant un nombre prédéfini de passages sur la bascule à wagons, lors desquels un indice de dispersion (1, 2) est déterminé à partir des résultats des pesages individuels en tant que valeurs du poids brut des types de construction de wagon ou de chargement et de leurs valeurs moyennes de poids brut, puis comparé avec une valeur limite (4, 5) prédéfinie et, si cette valeur limite (4, 5) est respectée et en présence d'un nombre prédéfini de valeurs de poids brut se trouvant dans cette plage de valeurs limites, la valeur moyenne de poids brut est définie en tant que poids de référence.

2. Procédé selon la revendication 1, **caractérisé en ce que** les passages s'effectuent au moins dans un sens de déplacement, en un ensemble ferroviaire ou individuellement au sein de la vitesse de passage autorisée de 0,1 à 5 km/h.

**3.** Procédé selon la revendication 1 ou 2, **caractérisé en ce que** les passages sont effectués en mode traction et/ou en mode décélération.

**4.** Procédé selon l'une des revendications précédentes, **caractérisé en ce que** l'indice de dispersion est déterminé à partir des valeurs de poids brut d'après la formule suivante

$$\sqrt{\sum\left(\left(\frac{Brut - Moyenne(Brut)}{NbPes\acute{e}es * Moyenne(Brut)}\right)^2\right)} * k\,[\%]$$

où

« Brut » désigne la valeur du poids brut ou du poids du wagon d'un type de construction ou de chargement,
« Moyenne(Brut) » désigne la valeur moyenne des poids bruts ou de wagon d'un type de construction ou de chargement,
« NbPesées » désigne le nombre de pesées utilisées, et « k » désigne le facteur d'une grandeur déterminée de manière empirique d'une balance donnée, avec lequel l'indice de dispersion, dans tous les cas connus, produit une estimation haute du pourcentage d'erreur relatif du poids de référence.

**5.** Procédé selon l'une des revendications précédentes, **caractérisé en ce que** le poids de référence est déterminé à partir des valeurs du poids brut des types de construction de wagon ou de chargement individuels pour au moins cinq passages dans chaque sens de déplacement.

**6.** Procédé selon l'une des revendications précédentes, **caractérisé en ce que** la détermination des poids de référence pour chaque type de construction de véhicule n'est effectuée que lorsque l'indice de dispersion ne dépasse pas la valeur limite (4, 5) d'un tiers de la valeur d'étalonnage de la bascule à wagons dynamique.

**7.** Procédé selon l'une des revendications précédentes, **caractérisé en ce que** les valeurs du poids brut ne sont utilisées pour la détermination du poids de référence que lorsque leur écart ne dépasse pas la valeur limite (4, 5) d'un tiers de la valeur d'étalonnage de la bascule à wagons dynamique.

Fig 1

Fig 2

Datei: WLE_PUSH_FOR_1.kb

| Nr: | Roh | Diff | % | Anz | Str% | %<Str | usable |
|---|---|---|---|---|---|---|---|
| 1: | 30.762 | 3 | 0.01 | 10 | 0.014 | yes | Usable |
| 2: | 32.017 | 4 | 0.01 | 10 | 0.016 | yes | Usable |
| 3: | 15.147 | 4 | 0.02 | 10 | 0.035 | yes | Usable |
| 4: | 37.813 | 3 | 0.01 | 10 | 0.011 | yes | Usable |
| 5: | 39.050 | 6 | 0.01 | 10 | 0.020 | yes | Usable |
| 6: | 62.258 | -2 | -0.00 | 10 | 0.005 | yes | Usable |
| 7: | 64.420 | 8 | 0.01 | 10 | 0.017 | yes | Usable |
| 8: | 93.333 | 1 | 0.00 | 10 | 0.001 | yes | Usable |
| 9: | 87.444 | 14 | 0.02 | 10 | 0.023 | yes | Usable |
| 10: | 27.833 | 5 | 0.02 | 10 | 0.027 | yes | Usable |
| 11: | 28.465 | -5 | -0.02 | 10 | 0.025 | yes | Usable |
| 12: | 35.266 | -4 | -0.01 | 10 | 0.016 | yes | Usable |
| 13: | 23.111 | 4 | 0.02 | 10 | 0.026 | yes | Usable |
| 14: | 23.098 | -2 | -0.01 | 10 | 0.012 | yes | Usable |
| 15: | 97.786 | -4 | -0.00 | 10 | 0.006 | yes | Usable |
| 16: | 88.787 | 5 | 0.01 | 10 | 0.008 | yes | Usable |

**EP 1 610 103 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19859492 A1
- DE 4439342 C2
- DE 10031092 A1